# EUROPEAN PATENT SPECIFICATION

(11) **EP 2 117 329 B1**
(45) Date of publication and mention of the grant of the patent: **14.02.2018**
(21) Application number: 07848202.3
(22) Date of filing: 10.12.2007
(51) Int. Cl.: A23C 9/13, A23C 9/127, A23C 9/15, A23C 9/12, A23C 9/16, A23C 19/05, A23L 11/00, A23L 33/00, A23C 13/16

(54) **METHOD FOR MODIFYING STRUCTURE OF LOW-ENERGY PRODUCT**
VERFAHREN ZUM MODIFIZIEREN DER STRUKTUR EINES ENERGIEREDUZIERTEN PRODUKTS
PROCÉDÉ PERMETTANT DE MODIFIER LA STRUCTURE D'UN PRODUIT FAIBLEMENT ÉNERGÉTIQUE

(30) Priority: 11.12.2006 FI 20065791
(43) Date of publication of application: 18.11.2009
(73) Proprietor: Valio Ltd., 00370 Helsinki (FI)
(72) Inventor: MYLLÄRINEN, Päivi, 00190 Helsinki (FI); RAJAKARI, Kirsi, 02660 Espoo (FI); MANNER, Liisa, 01280 Vantaa (FI)
(74) Representative: Kolster Oy Ab
(86) International application number: PCT/FI2007/050671
(87) International publication number: WO 2008/071841

(56) References cited:
- EP-A1- 0 119 329
- WO-A1-01/41578
- WO-A1-2005/041677
- WO-A1-2007/026053
- WO-A1-2007/060288
- WO-A2-2004/019693
- WO-A2-2005/012317
- GB-A- 654 384
- US-A- 3 235 386
- US-B1- 6 416 797
- BRITTEN M ET AL: "Acid-induced gelation of whey protein polymers: effects of pH and calcium concentration during polymerization", FOOD HYDROCOLLOIDS, ELSEVIER, XX, vol. 15, no. 4-6, 1 January 2001 (2001-01-01), pages 609-617, XP008107537, ISSN: 0268-005X, DOI: DOI:10.1016/S0268-005X(01)00049-2
- LORENZEN P.C. ET AL.: 'Effect of enzymatic cross-linking of milk proteins on functional properties of se-style yoghurt' INTERNATIONAL JOURNAL OF DAIRY TECHNOLOGY vol. 55, no. 3, 2002, pages 152 - 157, XP002254745
- Van-Den Truong ET AL: "Cross-Linking and Rheological Changes of Whey Proteins Treated with Microbial Transglutaminase", Journal of Agricultural and Food Chemistry, vol. 52, no. 5, 1 March 2004 (2004-03-01), pages 1170-1176, XP055140265, ISSN: 0021-8561, DOI: 10.1021/jf034397c

## Description

### FIELD OF THE INVENTION

The invention relates to a method for treating a raw material liquid by means of a low-calcium milk protein containing both casein and whey proteins and transglutaminase as a cross-linking enzyme. The invention also relates to a method for modifying and stabilizing the structure of low-energy acidified milk-based foodstuffs by means of a low-calcium milk protein containing both casein and whey proteins and transglutaminase as a cross-linking enzyme. The method is suitable for preparing acidified milk- based foodstuffs, particularly low-fat and fat-free products. The invention further relates to low-energy products prepared with the method of the invention.

### BACKGROUND OF THE INVENTION

Typical for the preparation of sour milk products is that an acidifier is added to homogenized, strongly heat-treated milk, which acidifies the milk and provides it with a typical structure and taste properties of the product. As a result of the heating, part of the milk's whey protein is denaturated.

It is known that the regulation of the structure of sour milk products includes, for instance, increasing of the dry matter content of milk, e.g. by evaporating the milk or by adding powder, and lowering of the dry matter content. The structure of the sour milk product is made thicker or looser by raising or lowering the protein content. For instance, the protein content of yoghurt milk can be increased by adding milk, whey or casein protein powder or by evaporating. Protein supplements based on non milk-based proteins are also useful. Problems of generally known methods include changing of sensory properties of sour milk products, additional costs and technological problems. In the preparation of milk products, particularly sour milk products, it is also known that a cross-linking transglutaminase enzyme modifying the structure is added to a protein source.

In sour milk products, primarily the native order and structure of milk proteins are broken and changed permanently. The structure of the casein particle is opened and the β casein partly flows to the water part when the pH of the milk decreases from the neutral (pH 6 to 7) to pH 5.3 and below during the acidification. If the pH decreases further, the particles join together (the hydrophilic part of the κ casein collapses) due to hydrophobic interactions. At the same time, they bind the surrounding "free water", thereby forming a viscous net-like gel structure. Such a gel-like, soft structure is typical and desired in different sour milk products, such as yoghurt, fermented milk, viili (ropy sour milk, a typical Finnish milk product) and drinkable yoghurt.

In products with a high fat content (≥ 2%), the structure stays fluffy and the mouth feeling pleasant during transports and even during a long storage time. However, the problem with low-fat and fat-free acidified milk- or plant-based, such as soybean-, oat- or rice-based, foodstuffs in particular, is the "compression" of the gel structure and simultaneous extraction of the liquid. In connection with sour milk products, the compression of the gel structure and the extraction of the liquid are referred to as wheying-off and syneresis. To prevent this phenomenon, the protein content of low-fat and fat-free products must often be increased above 4%. By using the conventional prior art, to prevent the compression of the gel structure and the extraction of liquid (syneresis) the product is provided with milk proteins or water-binding, other animal- or plant-based proteins, such as gelatine, or polysaccharides, such as starch, gellan gum, guar gum, pectin, arabic gum, etc. The problem with this is a weak instable "net" between, for instance, gelatine molecules, inside of which the protein molecules stay, which can be observed, for instance, as the shear stability of the product, as gelatinous lumps and as a lumpy mouth feeling.

The preparation of low-fat and fat-free yoghurts or acidified plant-based products without a protein supplement does not work. In the acidification of milk-based products and during storage, the whey and casein proteins of the milk "clot" and the water-binding surface area becomes smaller (the capillaries become larger), whereby the water is pressed apart to its own phase and the structure is "drained".

In fat-containing yoghurts, homogenized fat globules (having the size of about 400 to 1000 nm) are located between the matrix formed by the proteins, hindering the clotting of the proteins. A fat-free, stirred yoghurt, wherein the proteins have been treated with transglutaminase, does not hold water either. Transglutaminase is found to reduce the extraction of water from the stirred yoghurt (Abou El-Nour et al., Egyptian J. Dairy Sci. 32 (2004) 3-86, Lorenzen et al., Kieler Milchwirtschaftliche Forschungsberichte, 57 (2) (2006) 97-115).

Amino acids of animal- and plant-based proteins may be cross-linked by enzymes, such as transglutaminase (EC 2.3.2.13) in a known manner. Covalent bonds formed in the enzyme treatment withstand different process conditions, such as heating and mixing, well. From milk proteins, caseins and particularly the κ casein, are the best substrate for transglutaminase. The β casein also contains a lot of glutamine and lysine, which are joined together by a transglutaminase enzyme.

Patent publication WO 2005/041677, Aria Foods Amba, discloses methods for producing a whey protein product that can be used as a stabilising food ingredient. Yogurt and cream cheese, for example, are stabilized with a whey protein gel produced by heat-treating calcium depleted whey protein. Patent publication EP 1 197 152 B1, Ajinomoto, describes a cross-linking method, wherein milk is pre-treated with transglutaminase and an additive glutathione acting on the function of the enzyme. After the treatment the transglutaminase is inactivated with heat treatment and milk is used for preparing different milk products. Cross-linking in the pre-treatment of raw milk before the conventional preparation of milk products, as described in the publication, is more effective than cross-linking with just an enzyme treatment.

It is also known that a transglutaminase enzyme treatment may lower the protein content of the protein source (Færgemand, M. et al., Milchwissenschaft 54 (10) (1999) 563-566). Patent publication EP 0 689 383 B1, Novo Nordisk A/S, describes the preparation of a milk-based gel, which is pre-treated with transglutaminase, acidified chemically with a hydrochloric acid, citric acid or glucono-delta-lactone (to pH 5.0) and heat-treated. In the method, the protein content of the gel could be lowered to 2.0 to 6.0%, whereas in the prior art a protein content of at least 10% was required. Van-Den Truong et al. (J. Agric, Food Chem. 2004, 52, 1170-1176) have studied the degree of cross-linking of a whey protein isolate (WPI) using transglutaminase at varying enzyme/substrate ratios and characterized the rheological properties of the cross-linked proteins.

In the prior art, the transglutaminase treatment is typically performed for raw material milk and the enzyme is inactivated by heat treatment, as described e.g. in patent publication EP 610 649 B1, Ajinomoto. Patent publication EP 1 206 192 B1, Friesland Brands, describes an alternative method, wherein a transglutaminase enzyme is added after the heat treatment of milk during the acidification step and also after the acidification. The method is characterized in that the enzyme is added after the acidification.

High enzyme costs, technological problems, the coarse structure of the product and limited viscosity modification possibilities in particular restrict the industrial usability of these known methods especially in the preparation of low-fat and fat-free products. In addition, the process control is problematic in the method of patent publication EP 1 206 192 B1 in particular. Thus, simpler and more effective processes are needed, wherein enzyme and raw material costs are minimized and problems associated with the structure of low-fat and fat-free products are avoided.

Retail trade and consumers demand acidified or non-acidified milk- or plant-based foodstuffs containing less energy and having a pleasant structure. The demand and interest in low-energy foodstuffs have increased significantly in the last years. On the other hand, because of the increasing nutrition knowledge and different dietary wishes (e.g. lacto-vegans), people want to have products with no added gelatine. Therefore, there is a need in this field to provide more effective, natural methods, by which consumer-friendly organoleptic properties of acidified or non-acidified milk- or plant-based foodstuffs, particularly acidified products, and the preservation of the product structure during storage are ensured.

Surprisingly it has now been found out that by adjusting the protein content of the raw material to a desired level by means of a low-calcium milk protein containing both casein and whey proteins and by heat-treating and enzyme-treating the raw material with transglutaminase as a cross-linking enzyme before a feasible further treatment, low-energy dairy products with an excellent taste and structure, such as sour milk products, may be produced without additional costs. In addition, the method of the invention helps to reduce the fat and protein content of the product and ensure the low energy content of the product. By employing the method, the structure of the product may be modified as desired and the preservation of the structure of the low-energy product can be ensured during transport and storage, for instance.

### BRIEF DESCRIPTION OF THE INVENTION

The invention provides a method for treating a milk raw material liquid to be used as a raw material by means of a low-calcium milk protein containing both casein and whey proteins and transglutaminase as a cross-linking enzyme. The invention also provides a method for modifying and stabilizing the structure of low-energy acidified products by means of a low-calcium milk protein containing both casein and whey proteins and transglutaminase as a cross-linking enzyme. The method according to the invention is suitable for the preparation of dairy products with an excellent taste and structure, particularly low-fat and/or fat-free acidified products. With the invention, it is also possible to lower the protein content of the product and/or to maximize the amount of whey protein in the product.

The invention provides a method, which is simple, economical, industrially applicable on a large scale and does not cause additional costs. The invention is based on the surprising observation that when a low-calcium milk protein containing both casein and whey proteins is used in regulating the protein content of a raw material liquid in the preparation of low-energy products, the raw material is heat-treated and transglutaminase as a cross-linking enzyme is used, problematic structural faults in the low-energy products can be avoided. Typical expressions describing such structural faults are flaky, lumpy, rice-like and causing wheying-off. In known methods, the problems in the preparation and storage of low-energy acidified products relate to, for instance, the inhomogeneity of the product and the separation of whey in the product during storage. The present invention thus provides a solution to avoid problematic structural faults in low-energy products.

### DETAILED DESCRIPTION OF THE INVENTION

The invention relates to a method for treating a raw material liquid, the method comprising
adjusting the protein content of the raw material liquid to a desired level with a low-calcium milk protein containing both casein and whey proteins
heat-treating and
enzyme-treating the raw material liquid with transglutaminase.

Thus, according to an embodiment of the invention, the protein content of the raw material liquid is adjusted to a desired level with a low-calcium milk protein containing both casein and whey proteins, the raw material with a standardized protein content is heat-treated, and the heat-treated raw material is treated with transglutaminase as a cross-linking enzyme.

According to another embodiment of the invention, the protein content of the raw material liquid is adjusted to a desired level with a low-calcium milk protein containing both casein and whey proteins, the obtained raw material liquid with a standardized protein content is treated with transglutaminase, and the obtained raw material liquid is heat-treated.

In the method of the invention, the heat treatment may also be performed in a plurality of stages. Thus, according to an embodiment of the invention, the protein content of the raw material liquid is adjusted to a desired level with a low-calcium milk protein containing both casein and whey proteins, the raw material liquid with a standardized protein content is heat-treated, after which it is treated with transglutaminase and heat-treated again.

The method of the invention may also comprise alternative method steps, such as homogenization and/or treatment with a lactase enzyme.

Thus, according to an embodiment of the invention, the protein content of the raw material liquid is adjusted to a desired level with a low-calcium milk protein containing both casein and whey proteins, the obtained raw material liquid with a standardized protein content is heat-treated, the heat-treated raw material liquid is homogenized, after which it is treated with transglutaminase.

In addition, according to an embodiment of the invention, the protein content of the raw material liquid is adjusted to a desired level with a low-calcium milk protein containing both casein and whey proteins, the obtained raw material liquid with a standardized protein content is heat-treated, and the heat-treated raw material liquid is treated with transglutaminase and a lactase enzyme. The lactase enzyme treatment may be performed simultaneously as the treatment with transglutaminase or it may be performed before the treatment with transglutaminase or after it.

According to yet another embodiment of the invention, the protein content of the raw material liquid is adjusted to a desired level with a low-calcium milk protein containing both casein and whey proteins, the obtained raw material liquid adjusted with respect to the protein content is heat-treated, the heat-treated raw material liquid is homogenized, after which it is treated with transglutaminase and a lactase enzyme.

The raw material liquid treated with the method of the invention may be used in the preparation of an acidified milk -based foodstuff product. The raw material treated with the method of the invention may also be used as an ingredient, for instance, in the component preparation in the food industry.

The invention also relates to a method for preparing a fresh acidified milk-based foodstuff product selected from yoghurt, fermented milk, viili, fermented cream, smetana/sour cream, quark, or cottage cheese, the method comprising
adjusting the protein content of a raw material liquid to a desired level with a low-calcium milk protein containing both casein and whey proteins,
heat-treating,
enzyme-treating the raw material liquid with transglutaminase, and
further treating the raw material liquid in a manner required by the product selected from yoghurt, fermented milk, viili, fermented cream, smetana/sour cream, quark, or cottage cheese to be produced.

Thus, according to an embodiment of the invention, the protein content of the raw material liquid is adjusted to a desired level with a low-calcium milk protein containing both casein and whey proteins, the obtained raw material liquid adjusted/standardized with respect to the protein content is heat-treated, and the heat-treated raw material is treated with transglutaminase, after which the obtained raw material liquid is further treated into a low-energy product.

According to another embodiment of the invention, the protein content of the raw material liquid is adjusted to a desired level with a low-calcium milk protein containing both casein and whey proteins, the obtained raw material liquid with a standardized protein content is treated with transglutaminase and the obtained milk raw material is heat-treated, after which the milk raw material is further treated into a low-energy product.

In the method of the invention, the heat treatment may also be performed in a plurality of stages. Thus, according to an embodiment of the invention, the protein content of the raw material liquid is adjusted to a desired level with a low-calcium milk protein containing both casein and whey proteins, the obtained raw material liquid adjusted with respect to the protein content is heat-treated, after which it is treated with transglutaminase and heat-treated again, after which it is further processed into a low-energy product.

The method of the invention may also comprise alternative method steps, such as homogenization and/or treatment with a lactase enzyme.

Thus, according to an embodiment of the invention, the protein content of the raw material liquid is adjusted to a desired level with a low-calcium milk protein containing both casein and whey proteins, the obtained raw material liquid adjusted with respect to the protein content is heat-treated, the heat-treated raw material liquid is homogenized, treated with transglutaminase and further processed into a low-energy product.

In addition, according to an embodiment of the invention, the protein content of the raw material liquid is adjusted to a desired level with a low-calcium milk protein containing both casein and whey proteins, the obtained raw material liquid with a standardized protein content is heat-treated and treated with transglutaminase and a lactase enzyme and further processed into a low-energy product. The lactase enzyme treatment may be performed simultaneously as the treatment with transglutaminase, or it may be performed before the treatment with transglutaminase or after it.

According to yet another embodiment of the invention, the protein content of the raw material liquid is adjusted to a desired level with a low-calcium milk protein containing both casein and whey proteins, the obtained raw material liquid with a standardized protein content is heat-treated and homogenized, after which it is treated with transglutaminase and a lactase enzyme and further processed into a low-energy product.

The invention further relates to low-energy products prepared with the method of the invention.

In the context of the present invention, the expression "raw material liquid" refers to a liquid, condensate or powder based on milk-based liquid, such as raw material milk, or a milk powder.

The raw material liquid suitable for the method of the invention may be raw material milk as such or pre-treated in a desired manner. Raw material milk may be milk derived from an animal, such as a cow or a goat, as such or treated in various ways. Milk may be treated by removing, for instance, protein, fat or lactose therefrom, as a result of which low-protein, fat-free, low-fat, lactose-free and/or low-lactose milk is obtained. In this context, raw material milk also refers to, for instance, pre-treated or untreated milks used in the production of yoghurt, viili and fermented milk.

Milk may be fractionated into fractions containing a various number of different components by means of chromatographic separation and/or micro-, nano- or ultrafiltration, for instance, and the fractions may be used as such as a raw material liquid or as different mixtures. Such fractions include a milk permeate and a lactose fraction, for example.

A milk permeate means a permeate obtained in the ultrafiltration of milk, which mainly contains lactose, ash and protein. The protein content of the milk permeate depends on the filtering conditions but is usually about 0.2 to 0.4% by weight, typically about 0.3% by weight of protein.

A lactose fraction means a fraction obtained as a result of chromatographic separation, which mainly contains lactose but also, among other things, proteins. The protein content of the lactose fraction depends on the separation conditions but is usually about 0.2 to 0.4% by weight, typically about 0.3% by weight of protein.

The further processing stage of the method of the invention, wherein the heat- and enzyme-treated raw material liquid adjusted with respect to the protein content is treated in a manner required by the product selected from yoghurt, fermented milk, viili, fermented cream, smetana/sour cream, quark, or cottage cheese to be produced, may include, for instance, acidification/ripening, mixing, separation, spicing, cooling, packing and/or product recovery characteristic of or dependent on the product to be produced.

The preparation method of the invention is applicable to the production of low-energy products. The products may be acidified milk -based foodstuffs.

When the preparation of acidified, low-energy products is concerned, the enzyme treatment is carried out with transglutaminase as a cross-linking enzyme and, if required, with a lactase enzyme before the acidification and other appropriate further processing into a low-energy product.

The method of the present invention is suitable for the preparation of acidified fresh products selected from yoghurt, fermented milk, viili and fermented cream, smetana/sour cream and quark-or cottage cheese.

Furthermore, the preparation method of the invention minimizes the addition of texturizers, such as gelatine, starch or pectin, used in the production of other, typically acidified milk-based foodstuffs, such as yoghurt. The use of animal- or plant-based proteins and carbohydrate-containing texturizers and/or ingredients in the preparation of acidified milk -based products and the regulation of the structure is known.

The low-energy product according to the invention is fat-free, whereby its fat content is below 0.5%. Typical for the low-energy product according to the invention is also that its protein content is lower than that of a conventional product. For example, a low-energy sour milk product contains not more than 40 kcal/100 g of energy in solid foodstuffs and not more than 20 kcal/100 ml of energy in liquid foodstuffs. The protein content of a low-energy sour milk product is 1 to 10%, typically about 2 to 5%. In addition, carbohydrates, such as lactose, are removed either entirely or partly to produce a low-energy product. This is carried out in accordance with previously known methods by using e.g. membrane methods (such as ultrafiltration), chromatographically or enzymatically (lactase).

In the context of the present invention, the expression "milk product" refers to milk, condensed milk, a milk powder or any liquid, semi-solid or solid milk-based preparation.

In the context of the present invention, the expression "milk protein" refers to a protein preparation or a milk product which contains both casein and whey proteins in essential amounts.

In the context of the present invention, the expression "low-calcium" refers to a milk product, such as milk, condensed milk or a milk powder, the natural calcium content of which is lowered to a region that is not over 0.3% by weight, preferably not over 0.2% by weight of the product's dry matter.

The expression "fat-free" refers to a product, which has a fat content of not more than 0.5 g/100g in solid foodstuffs and not more than 0.5 g/100 ml in liquid foodstuffs.

The expression "low-fat" refers to a product with a fat content of not more than 3 g/100 g in solid foodstuffs or 1.5 g/100 ml in liquid foodstuffs (1.8 g/100 ml in semi-skimmed milk).

In the method of the invention, the low-calcium milk protein may have the form of milk, condensed milk or milk powder, and in the adjustment of the protein content it is used 0.01 to 100%, calculated on the raw material. Examples of low-calcium milk protein ingredients useful in the method of the invention include Mineval® milk, condensed milk and milk powder (Valio Oy). Mineval® preparations comprise both casein and whey proteins in the form of nanoparticles. When yoghurt is produced, 0.05 to 2.0% of low-calcium milk protein is preferably used, when fat-free milk is used as milk raw material and Mineval® milk powder is used for adjusting the protein content to a desired level. In the preparation of fermented milk, from 10 to 50% of the low-calcium milk protein is preferably used. In the method of the invention, the protein content of the raw material liquid is adjusted between 1 and 4%, preferably between 2 and 3.5%. The protein content of low-energy (fat-free, lactose-free) yoghurt of the invention is between 3.0 and 4.7%, preferably 3.5 and 3.7%. Correspondingly, the protein content of fermented milk is 2.2 to 3.5%, preferably bly 2.3 to 2.7%. A lower protein level allows considerable cost savings in the production processes. The method of the invention makes it possible to achieve a great whey protein yield in the low-fat product, which improves the yield and contributes to cost savings.

In the method of the invention, the heat treatment or treatments are carried out as is known in the field. Examples of heat treatment methods useful in the method of the invention include pasteurization, high pasteurization, heating at a temperature lower than the pasteurization temperature for a sufficiently long time, thermisation, i.e. heating at about 57 to 68°C for at least 15 seconds, UHT treatment and ESL treatment. Worth mentioning are particularly UHT treatment, where the raw material is heated at about 135 to 140°C for 2 to 4 seconds, ESL treatment, where the raw material is heated at about 127 to 135°C for 1 to 2 seconds, pasteurization, where the raw material is heated at about 70 to 72°C for at least 15 seconds, or high pasteurization, where the raw material is heated at about 95°C for at least five minutes.

Surprisingly it was found out that the heat treatment improved the dissolving of the low-calcium milk powder ingredient in the liquid and at the same time its proteins were "opened" to a shape advantageous for a cross-linking enzyme, such as transglutaminase. It is probable that a soluble low-calcium milk protein is cross-linked easily and it forms a net-like stable structure in the space between the casein particles of milk. Consequently, the milk proteins do not clot and the wheying-off is prevented during storage. It is also possible that the low-calcium milk protein is cross-linked with the casein particles of milk, because the cross-linking enzyme, such as transglutaminase, works best between similar proteins, which means that it joins the casein proteins together and the whey proteins together, but not in a crosswise manner.

In the method of the invention, the homogenization is performed in a manner known in the field. An example of the homogenization of the invention is the homogenization of a mixture consisting of fat-free milk heated during the production of yoghurt and a low-calcium Mineval® milk powder at the pressure of 200 bar. In an embodiment of the invention, the heat treatment of the mixture of milk raw material and low-calcium milk, condensed milk or milk powder after the homogenization eliminates feasible problematic taste problems in the production of a sour milk product and the final product, which are caused by quality variations of the raw material and microbes.

The cross-linking enzyme to be used in the method of the invention is transglutaminase.

The transglutaminase enzyme (EC 2.3.2.13) catalyzes the formation of covalent bonds between the amino groups of glutamine and lysine amino acids in the protein molecules. Microbe-based transglutaminase preparations accepted for use as foodstuffs are commercially available. Manufacturers recommend that depending on the purpose of use, the enzyme should usually be dosed in amounts of 1 to 3 U/g of protein. Examples of commercial transglutaminase preparations include Activa®YG and Activa®MP (Ajinomoto, Japan). Commercially available are also tyrosinase and laccase preparations. The optimal conditions depend on the enzyme in question, and they can be obtained from the manufacturers of commercial enzymes.

In the method of the invention, the milk raw material may also be treated with a lactase enzyme. The lactase treatment may be performed at the same time as the treatment with a cross-linking enzyme. On the other hand, the lactase treatment may also be performed separately from the cross-linking enzyme, either before or after the treatment with the cross-linking enzyme. In an embodiment of the invention, the treatment with the lactase enzyme and the cross-linking enzyme is done simultaneously. A plurality of different lactase enzymes (β-D-galactosedases), which are suitable for use in the method of the invention for preparing lactose-free low-energy products, are commercially available. Examples of these include the ones produced by *Kluyveromyces fragilis,* such as HA lactase (Chr. Hansen A/S, Denmark) or the ones produced by *Kluyveromyces lactis,* such as Validase (Valley Research Inc., USA), Maxilact L2000 lactase (DSM, Holland) and Godo YNL (Godo Shusei Company, Japan). An example of mould-based lactase preparations is GLL conc. lactase produced by *Aspergillus oryzae* (Biocon Japan Ltd, Japan). The optimal hydrolysis conditions depend on the enzyme in question, and they are available from the manufacturers of commercial enzymes.

In the preparation of sour milk products, prepared with the method of the invention, the prior art known per se in the context of acidified products is employed, as to acidifiers, acidification conditions, such as temperature, time and mixture, and heat treatments.

The acidification is carried out by adding a biological acidifier characteristic of each product, e.g. a bulk starter or DVS starter (direct to vat starter), a chemical acidifier or organic or inorganic acids. For instance, the production of yoghurt traditionally uses *Lactobacillus bulgaricus* and *Streptococcus thermophilus* strains. Examples of suitable organic acids include glucono-delta-lactone and lactic acid. In the production of viili type of products, in addition to lactic acid bacteria acidifiers also viili mould is used.

Acidified products prepared with the method of the invention may be acidified either in a tank before the product is packed or immediately after the packing in a consumer or food service package. From the sour milk products, particularly viili type products and set type yoghurts are acidified in a package.

It was also observed that when the milk raw material treated in accordance with the invention was acidified, transglutaminase used as a cross-linking enzyme still functions efficiently during the acidification. Due to the acidification, the structure of the casein particles becomes looser (pH 5.2), whereupon the enzyme is able to cross-link the β and κ casein proteins in the inner parts of its structures.

The energy content of an acidified milk-based foodstuff prepared with the method of the present invention is low.

By using the method of the invention, foodstuffs with different, such as sufficiently viscous and/or homogeneous structures may be produced, which have an excellent, natural taste or do not contain flavour defects, such as a cow-house taste and which are low-protein, low-energy acidified milk -based foodstuffs.

The structure of the products prepared with the method of the present invention stays homogenous and no wheying-off takes place during cold storage (+4°C, one month) or storage at room temperature (10 to 25°C, several weeks). An example of a preferred embodiment of the method of the invention is the preparation of a fat-free yoghurt with a protein content of 3.3 to 4.2 per cent from the mixture of fat-free milk and a low-calcium Mineval® milk powder ingredient. The structure of the produced yoghurt was smooth and velvety. The whey was not separated during the storage, not even when the yoghurt was stored at room temperature for weeks. Further examples of desired structural properties are, e.g. in case of quark, a suitable firmness and spreadability of bulk as well as a smooth mouth feeling.

The method of the invention provides the advantage that the structure of the product prepared with the method stays the same, although it is processed mechanically many times during the storage. In addition, the deep-freezing and defrosting resistance of the products prepared with the method is excellent.

The method of the invention may also be used for preparing conventional fat- and carbohydrate-containing products.

The method of the invention may also be applied to a modern component preparation, wherein milk components with different fat, protein and lactose contents are combined in a known manner just before the packing. In accordance with the invention, the combining is preferably made immediately before the enzyme treatment either only with transglutaminase as the cross-linking enzyme, or with both transglutaminase and lactase, and the acidification, or before the acidification.

With the method of the present invention, it is possible to avoid problems associated with the production and preservation of low-energy milk -based products produced with the prior art, such as inhomogeneity and, in case of acidified milk- products, "compression" of the gel structure and simultaneous separation of the liquid during storage. In addition, with the method of the invention low-energy acidified milk -based foodstuffs with an excellent taste and structure, particularly acidified products, can be produced without any specific additional costs. The method of the invention is simple and suitable for large-scale production.

The method of the present invention may be applied to both batch production and continuous production. Preferably the method of the invention is carried out as a batch process.

The following examples illustrate the implementation of the invention but do not restrict the invention to said product applications only.

### EXAMPLE 1 - PREPARATION OF YOGHURT

Yoghurt of the invention was prepared by adding 40 g of low-calcium Mineval® milk powder (Valio Oy) to fat-free milk (2000 g). The mixture was heated to 60°C and homogenized at the pressure of 200 bar. The homogenized mixture was pasteurized (80 to 92°C, 5 to 15 min), cooled (42°C), and a transglutaminase preparation (1 ppm) (Activa®YG, Ajinomoto, Japan) and Maxilact L2000 lactase (DSM, Holland) were added. The enzymes acted 1 to 2 hours, after which an acidifier was added. The mixture was acidified 4 hours, until the pH was 4.6. After the desired pH had been reached, the structure of the product was broken by mixing, and it was cooled, packed and transferred to a cold store (below 6°C). The wheying-off, taste and structure were observed.

A reference yoghurt was prepared in the same way as the yoghurt of the invention, except that neither low-calcium Mineval® powder nor a transglutaminase preparation was added to fat-free milk before acidification.

By means of the method of the invention, the protein content of fat-free yoghurt could be lowered from 4.2% to 3.3% without deteriorating the quality of the fat-free yoghurt. The structure of the produced yoghurt was smooth and velvety. The whey was not separated during the storage, not even when the yoghurt was stored at room temperature for weeks. The reference yoghurt, the protein content of which was low, wheyed off immediately during the production when the structure was broken and the structure of the product was flaky and/or coarse.

### EXAMPLE 2 - PREPARATION OF YOGHURT

The yoghurt of the invention was prepared as in Example 1, but the mixture was not heated to 60°C nor was it homogenized.

The structure of the produced yoghurt was smooth and velvety. The whey was not separated during the storage, not even when the yoghurt was stored at room temperature for weeks.

### EXAMPLE 3 - PREPARATION OF FERMENTED MILK

Fermented milk of the invention was prepared by adding 180 g of low-calcium Mineval® milk powder to 820 g of fat-free milk. The mixture was pasteurized (90°C, 10 min) and the temperature was adjusted to an acidification temperature of 24°C. Fermented milk acidifiers and 100 mg of transglutaminase preparation (Activa®YG, Ajinomoto) were added. The milk was acidified in a tank for one day until the pH was 4.5. The fermented milks were mixed, packed into packages of one litre and transferred to a cold store (< 6°C). The wheying-off, taste and structure were observed for three weeks. In addition, viscosity was measured at intervals of one week.

A reference fermented milk was prepared in the same way as the fermented milk of the invention, except that 1000 g of fat-free milk were used and neither low-calcium Mineval® milk powder nor, during the acidification, a transglutaminase preparation was added to the milk.

By means of the method of the invention, milk whose protein content was lowered from 3.3% to 2.5% could be used as raw material milk without deteriorating the quality of the fermented milk. Both fermented milks had similar organoleptic properties and viscosity.

### EXAMPLE 4 - VIILI, SOUR CREAM SUCH AS FERMENTED CREAM, SMETANA

In the preparation of low-energy viili, fermented cream and smetana of the invention, low-calcium Mineval® milk powder was added to milk with a standardized fat content (0 to 42%), and the mixture was heated to 65°C. It was homogenized at the pressure of 200 bar, pasteurized (80 to 92°C, 5 to 15 minutes), and the temperature was adjusted to an acidification temperature characteristic of each product, e.g. to 24°C. Acidifiers and a transglutaminase preparation (Activa®YG, Ajinomoto) were added and acidified either in a tank or packed in cups and allowed to acidify in a package until the pH was 4.5. If necessary, they were packed, and the packages were transferred to a cold store (< 6°C) to wait for delivery. During the storage of the low-energy viili, fermented cream and smetana prepared with the method of the invention, the whey was not separated from the bulk.

### EXAMPLE 5 - COMPONENT PREPARATION OF YOGHURT, VIILI AND SOUR CREAMS

In the preparation of low-energy yoghurts, viili, sour creams, such as fermented cream and smetana, and fermented milks, based on a modern component preparation, milk components with different fat contents are not combined until immediately before the enzyme treatment (transglutaminase or transglutaminase and a lactase treatment) and the acidification in a tank, or before the acidification, or only before the packing. These milk components are used in a dairy in the production of other milk products, too.

The components were mixed well before further treatment. The prepared products were packed, after which the packages were transferred to a cold store (< 6°C) to wait for delivery. The structure of the produced yoghurt was smooth and velvety. During the storage the whey was not separated. The structure of the reference yoghurt was erroneous, wheying off and flaky/coarse.

### EXAMPLE 6 - COMPONENT PREPARATION OF YOGHURT, VIILI, SOUR CREAMS AND FERMENTED MILK

Low-energy yoghurt, viili, sour creams, such as fermented cream and smetana, and fermented milks were prepared with a technique based on a modern component preparation, as described in Examples 1 and 5, but the acidification was carried out in a package at 42°C, after which the products were transferred to a cold store (< 6°C), where they cooled. The structure of the produced yoghurt was smooth and velvety. During the storage, the whey was not separated. The structure of the reference yoghurt was erroneous, wheying off and flaky/coarse.

### EXAMPLE 7 - COTTAGE CHEESE

In the preparation of cottage cheese, the grains of the cottage cheese are made of fat-free milk. Part of the fat-free milk is replaced by low-calcium Mineval® milk, condensate or powder. The mixture is heat-treated and cooled, and transglutaminase enzyme and lactase enzyme (such as GO-DO YNL or Maxilact L2000) are added to the mixture and allowed to act for 2 hours, after which a bulk starter and a small amount of rennet are added to the mixture. The curd is cut when the precipitate is sufficiently hard (for example, when the pH is below 5). The grain is heated by slowly stirring it in the whey. The temperature and time are selected so that they suffice to inactivate the enzymes. After this, the grains are washed with cold water before drying and addition to the dressing of the cottage cheese. In the preparation of cottage cheese according to the method, the yield is significantly better than in a conventional preparation method.

### EXAMPLE 8 - FAT-FREE, LACTOSE-FREE QUARK

A Mineval® ingredient in powder or condensate form was added to fat-free milk (1000 g). Alternatively, low-calcium milk may be used. The mixture was pasteurized (80 to 92°C, 5 to 15 min) and cooled to 27°C. Transglutaminase and a lactase enzyme (Godo YNL/Maxilact L2000) were added to the mixture and were allowed to react for 2 hours. A mesophilic acidifier and a rennet were added and allowed to acidify to a pH value of 4.5 for 19 hours. It was mixed, the whey was separated, cooled and packed with conventional methods.

The wheying-off and the structure and taste of the quark were observed organoleptically. The properties of the quark of the invention did not differ from those of a conventional quark but the quark yield was improved considerably, when quark was prepared with the method of the invention.

## Claims

1. A method for preparing a fresh acidified milk-based foodstuff product selected from yoghurt, fermented milk, viili, fermented cream, smetana/sour cream, quark, or cottage cheese, **characterized by** comprising the steps of
a) adjusting the protein content of a raw material liquid to a desired level with a low-calcium milk protein containing both casein and whey proteins,
b) heat-treating,
c) treating with transglutaminase after the heat treatment, and
d) treating in a manner characteristic of the product selected from yoghurt, fermented milk, viili, fermented cream, smetana/sour cream, quark, or cottage cheese to be produced.

2. The method as claimed in claim 1, wherein the heat treatment is performed in a plurality of stages.

3. The method as claimed in claim 1 or in claim 2, wherein the method also comprises a homogenization stage.

4. The method as claimed in any one of claims 1 to 3, wherein the method also comprises a treatment with a lactase enzyme.

5. The method as claimed in claim 4, wherein the lactase enzyme treatment is performed at the same time as the treatment with transglutaminase.

6. The method as claimed in any one of claims 1 to 5, wherein the product is a low-energy product.

7. The method as claimed in claim 1, wherein the product is yoghurt, fermented milk, viili, fermented cream, smetana/sour cream or quark.

8. A fresh acidified milk-based product selected from yoghurt, fermented milk, viili, fermented cream, smetana/sour cream, quark, or cottage cheese, **characterized in that** it is prepared with the method as claimed in any one of claims 1 to 7.

9. A product as claimed in claim 8, **characterized in that** it is a low-energy sour milk product, preferably a fat-free sour milk product.

10. The method as claimed in any one of claims 1 to 7, wherein the step d) comprises acidification/ripening, mixing, separation, spicing, cooling, packing and/or product recovery.

## Patentansprüche

1. Verfahren zur Herstellung eines frischen gesäuerten milchbasierten Lebensmittelprodukts, ausgewählt aus Joghurt, fermentierter Milch, Viili, fermentierter Sahne, Smetana/Sauerrahm, Quark oder Körniger Frischkäse, **dadurch gekennzeichnet, dass** es folgende Schritte umfasst:
a) Einstellen des Proteingehalts einer Rohmaterialflüssigkeit auf ein gewünschtes Niveau mit einem Milchprotein mit niedrigem Calciumgehalt, das sowohl Kasein als auch Molkeproteine enthält,
b) Hitzebehandeln,
c) Behandeln mit Transglutaminase nach der Hitzebehandlung, und
d) Behandeln auf eine Weise, die für das aus Joghurt, fermentierter Milch, Viili, fermentierter Sahne, Smetana/Sauerrahm, Quark oder Körniger Frischkäse ausgewählte, zu produzierende Produkt charakteristisch ist.

2. Verfahren nach Anspruch 1, wobei die Hitzebehandlung in einer Vielzahl von Stufen durchgeführt wird.

3. Verfahren nach Anspruch 1 oder Anspruch 2, wobei das Verfahren auch eine Homogenisierungsstufe umfasst.

4. Verfahren nach einem der Ansprüche 1 bis 3, wobei das Verfahren auch eine Behandlung mit einem Lactaseenzym umfasst.

5. Verfahren nach Anspruch 4, wobei die Lactaseenzymbehandlung zur selben Zeit wie die Behandlung mit Transglutaminase durchgeführt wird.

6. Verfahren nach einem der Ansprüche 1 bis 5, wobei das Produkt ein niederenergetisches Produkt ist.

7. Verfahren nach Anspruch 1, wobei das Produkt Joghurt, fermentierte Milch, Viili, fermentierte Sahne, Smetana/Sauerrahm oder Quark ist.

8. Frisches gesäuertes milchbasiertes Produkt, ausgewählt aus Joghurt, fermentierter Milch, Viili, fermentierter Sahne, Smetana/Sauerrahm, Quark oder Körniger Frischkäse, **dadurch gekennzeichnet, dass** es mittels des Verfahrens nach einem der Ansprüche 1 bis 7 hergestellt ist.

9. Produkt nach Anspruch 8, **dadurch gekennzeichnet, dass** es ein niedrigenergetisches Sauermilchprodukt ist, bevorzugt ein fettfreies Sauermilchprodukt.

10. Verfahren nach einem der Ansprüche 1 bis 7, wobei Schritt d) Säuerung/Reifung, Mix, Separierung, Gewürzen, Abkühlen, Verpacken und/oder Produktrückgewinnung umfasst.

## Revendications

1. Procédé de préparation d'un produit alimentaire à base de lait frais acidifié sélectionné parmi du yaourt, du lait fermenté, du viili, de la crème fermentée, du smetana/de la crème acide, du quark, ou du fromage frais granuleux, **caractérisé en ce qu'**il comprend les étapes :
a) d'ajustement de la teneur en protéine d'un liquide matière première à un niveau désiré avec une protéine de lait faible en calcium contenant à la fois de la caséine et des protéines de lactosérum,
b) de traitement thermique,
c) de traitement avec de la transglutaminase après le traitement thermique, et
d) de traitement d'une manière caractéristique du produit sélectionné parmi du yaourt, du lait fermenté, du viili, de la crème fermentée, du smetana/de la crème acide, du quark, ou du fromage frais granuleux à produire.

2. Procédé selon la revendication 1, dans lequel le traitement thermique est réalisé en une pluralité d'étapes.

3. Procédé selon la revendication 1 ou la revendication 2, dans lequel le procédé comprend également une étape d'homogénéisation.

4. Procédé selon l'une quelconque des revendications 1 à 3, dans lequel le procédé comprend également un traitement avec une enzyme lactase.

5. Procédé selon la revendication 4, dans lequel le traitement avec l'enzyme lactase est réalisé au même moment que le traitement avec la transglutaminase.

6. Procédé selon l'une quelconque des revendications 1 à 5, dans lequel le produit est un produit faible en énergie.

7. Procédé selon la revendication 1, dans lequel le produit est du yaourt, du lait fermenté, du viili, de la crème fermentée, du smetana/de la crème acide ou du quark.

8. Produit à base de lait frais acidifié sélectionné parmi du yaourt, du lait fermenté, du viili, de la crème fermentée, du smetana/de la crème acide, du quark, ou du fromage frais granuleux, **caractérisé en ce qu'**il est préparé avec le procédé tel que revendiqué dans l'une quelconque des revendications 1 à 7.

9. Produit selon la revendication 8, **caractérisé en ce qu'**il s'agit d'un produit lait acide faible en énergie, de préférence un produit lait acide écrémé.

10. Procédé selon l'une quelconque des revendications 1 à 7, dans lequel l'étape d) comprend une acidification/une maturation, un mélange, une séparation, un assaisonnement, une réfrigération, un emballage et/ou une récupération du produit.
